# EUROPÄISCHE PATENTSCHRIFT

(11) **EP 2 054 846 B1**
(45) Veröffentlichungstag und Bekanntmachung des Hinweises auf die Patenterteilung: **06.04.2011**
(21) Anmeldenummer: 07785607.8
(22) Anmeldetag: 29.06.2007
(51) Int. Cl.: G06K 19/077, B29C 45/14, B65D 25/20

(54) **VERFAHREN ZUR HERSTELLUNG EINES BEHÄLTNISSES UND EIN BEHÄLTNIS ZUR LAGERUNG UND ZUM TRANSPORT VON STÜCK- UND SCHÜTTGÜTERN**
METHOD FOR THE PRODUCTION OF A CONTAINER, AND CONTAINER FOR STORING AND TRANSPORTING PIECE GOODS AND BULK MATERIAL
PROCÉDÉ POUR PRODUIRE UN CONTENANT ET CONTENANT UTILISÉ POUR STOCKER ET TRANSPORTER DES PRODUITS EN MORCEAUX ET EN VRAC

(30) Priorität: 29.06.2006 DE 102006030451
(43) Veröffentlichungstag der Anmeldung: 06.05.2009
(73) Patentinhaber: KSW Microtec AG, 01099 Dresden (DE)
(72) Erfinder: GALLSCHÜTZ, Sebastian, 01109 Dresden (DE)
(74) Vertreter: Lippert, Stachow & Partner
(86) Internationale Anmeldenummer: PCT/DE2007/001209
(87) Internationale Veröffentlichungsnummer: WO 2008/000253

(56) Entgegenhaltungen:
- EP-A- 1 560 155
- WO-A-01/00493
- DE-A1- 10 220 502
- DE-A1- 19 613 494
- US-A- 4 868 544
- US-A1- 2005 280 542

## Beschreibung

Die Erfindung betrifft ein Verfahren zur Herstellung eines Behältnisses und ein Behältnis zur Lagerung und zum Transport von Stück- und Schüttgütern, welches ein identifizierbares, flexibles Etikett mit einem integrierten RFID-Transponder aufweist.

Moderne Logistikprozesse erfordern eine Identifizierbarkeit der einzelnen Objekte. So sind teilweise die Behältnisse zur Lagerung und zum Transport von beispielsweise Stück- und Schüttgütern mittels verschiedener Technologien gekennzeichnet und Informationen über den Aufenthaltsort, die Anzahl, die Menge, die Größe und das Gewicht und anderes mehr der identifizierbaren Objekte sind beispielsweise auch über das Internet oder andere Informationsquellen bezieh- und nachverfolgbar.

Im Stand der Technik ist die Methode der Strichcodierung, auch als Barcode bezeichnet, bekannt, bei welcher Etiketten mit einem Barcode versehen werden, der die entsprechenden Informationen über das Transportgut bzw. sein Verpackungsbehältnis enthält. Der Barcode wird optisch ausgelesen, wodurch ein Sichtkontakt und die eindeutige Erkennung des Strichmusters erforderlich ist. Um den Belastungen bei Transportprozessen gerecht zu werden, wird der Barcode bzw. Strichcode auf ein Etikett aufgebracht, welches mittels IN-MOULD-Prozessen durch Giessen, Spritzen oder Kalandrieren von Kunststoffobjekten in die Transportbehältnisse stoffschlüssig integriert wird.

Die Identifizierung über Barcodes ist eine etablierte Technologie, jedoch gibt es teilweise Nachteile in der Handhabung bei einem beschädigten oder aus anderen Gründen schwer lesbaren Barcode. Dies führt zu Störungen im Ablauf der Logistikprozesse, welche zumeist nur zeit- und personalaufwendig zu beheben sind,

Eine alternative Methode der Identifizierung von Objekten wird durch das so genannte RFID-Labeling zur Verfügung gestellt. RFID (Radio Frequency Identification) ist eine Methode um Daten berührungslos und ohne Sichtkontakt aus dem Speicher eines Mikrochips zu lesen. Der Mikrochip ist mit einer Antenne auf einem Träger verbunden. Die Gesamtheit dieser Komponenten wird auch als RFID-Transponder bezeichnet. Die Transponder werden im Stand der Technik bereits auf flexiblen Trägermaterialien in Form von Etiketten eingesetzt.

Die RFID-Transponder sind bereits als Massenprodukte effizient mittels innovativer Verfahren herstellbar und werden bereits in großem Umfang, beispielsweise für Warensicherungssysteme, genutzt,

Für die Objektverfolgung bei Logistikprozessen werden allerdings an die elektrische und mechanische Belastbarkeit der Identifizierungssysteme sehr hohe Anforderungen gestellt. Beispielsweise ist es nicht zu verhindern, dass Transportbehältnisse während des Transportes durch mechanische Beschädigung anderer Transportbehältnisse oder durch Transportwerkzeuge Beeinträchtigungen erleiden.

Weiterhin werden Transportbehältnisse gerade im Lebensmittelbereich intensiven Reinigungs- oder Sterilisationsprozeduren unterworfen, um den hygienischen Anforderungen der transportierten Güter gerecht zu werden.

Dies hat zur Folge, dass Etiketten mit RFID-Transpondern der herkömmlichen Art für die rauen Anforderungen der erhöhten mechanischen und teilweise chemischen Belastung bei Logistikprozessen nicht uneingeschränkt einsetzbar sind.

Im Stand der Technik gibt es somit Bemühungen, die RAPID-Technik robuster und widerstandsfähiger gegenüber mechanischen Belastungen auszubilden.

Aus DE 102 20 502 A1, das als nächsten Stand der Technik gesehen wird, ist ein Verfahren zum Herstellen eines Kastens aus Kunststoff, insbesondere eines Flaschenkastens bekannt, der mit einem Radiofrequenz-Identifikations-System (RFID) versehen wird, welches mit einer Antenne ausgerüstet ist, wobei das RFID, das in loser Form verschiedenen Waren beigelegt werden kann, mit einer als Etikett ausgebildeten Trägerfolie verbunden wird und beide in die Spritzform des Kastens eingelegt und anschließend mit dem den Kasten bildenden Kunststoff hinterspritzt werden Hiernach besteht das in den Kunststoffkasten einzubringende Element aus mindestens zwei unterschiedlichen und verschiedenen Lagen, dem RFID und einer als Etikett ausgebildeten Trägerfolie.

In WO 01/00493 A1 ist in gleicher Weise ein Plastikbehälter für Transport oder Lagerung von Waren, beispielsweise eine Flaschenkiste, beschrieben, die eine Basis und vertikale Seitenwände umfasst sowie ein Etikett, welches an wenigstens einer der Seitenwände angebracht ist, wobei zwischen einer Seitenwand und einem Etikett ein elektronischer Transponder angeordnet ist.

EP 1 560 155 A1 offenbart ein Verfahren zur Herstellung von Informationsträgern, z.B. von Etiketten, Tickets oder dergleichen, insbesondere von kontaktlosen Informationsträgern, die integrierte Schaltkreise (ICs) und mit diesen verbundene Antennen aufweisen, wobei auf Flächenbereichen einer Bahn in Abständen hintereinander Antennen gebildet werden und ferner ein je Antenne vorgesehener IC mit seinem Gehäuse oder seinen Kontakten elektrisch leitend mit zugeordneten Kontaktflächen der Antenne verbunden wird.

In der US 2006/0086013 A1 wird ein TN-MOULD-Bauteil offenbart, welches den RFID-Transponder in dem Bauteil verkapselt. Dieser verkapselte Transponder wird dann mittels formschlüssiger Verbindung in die Kunststoffobjekte ohne eine stoffschlüssige Verbindung eingebracht.

Nachteilig dabei ist, dass die RFID-Transponder nicht ausreichend sicher mit dem Transportbehältnis verbindbar sind, sondern bei starker Beanspruchung sich vom Behältnis lösen und verloren gehen können. Außerdem sind mehrere Arbeitsschritte zur Herstellung des verkapselten Chips und dessen Einbringung in die Kunststoffobjekte erforderlich, wodurch höhere Kosten entstehen.

Es ist bekannt, die RFID-Transponder in zusätzliche, IN-MOULD-fähige Folienlagen zu laminieren und in das betreffende Behältnis mittels des IN-MOULD-Prozesses einzubringen, was zu einem Sandwichaufbau von mehreren Lagen mit dem eigentlichen Inlay führt. Die äußeren Lagen sind speziell mit aktivierbarem Klebstoff beschichtet, der dann eine mechanisch robuste Haftung zum Kunststoffgefäß ermöglicht.

Das IN-MOULD-Verfahren ist ein Spritzgießverfahren, bei dem in das Spritzgießwerkzeug eingelegte Substrate, wie Stoff, Papier, Holzfurnier oder beliebig bedruckte oder strukturierte Folien, hinterspritzt werden. Auf diese Weise entstehen in einem Arbeitsschritt anspruchsvolle Oberflächen und ein formschlüssiger, kraftschlüssiger oder stoffschlüssiger Verbund der Substrate mit dem Spritzgussteil.

Ein derartiges IN-MOULD-RFID-Etikett wird in der US 2004/0094949 A1 beschrieben.

Dabei wird ein Etikett mit einem Mikrochip und einer Transponderantenne versehen und zum Schutz der elektrisch wirksamen Strukturen und der Ausbildung der Verbindung des Etiketts mit einem zu kennzeichnenden Objekt mittels mehrerer Lagen von Folien versehen, was zu einem SandwichAufbau des Etiketts führt.

Nachteilig an diesem System aus mehreren verschiedenen funktionellen Schichten ist, dass zusätzliche Kosten durch aufwendige Laminierprozesse und zusätzliche Materialien entstehen und darüber hinaus das Schrumpfungsverhalten der Werkstoffe untereinander im Sandwich zu Spannungen im RFID-Transponder führt, was teilweise die Zerstörung der Funktionsfähigkeit des RFID-Transponders nach sich zieht.

Weiterhin ist ein RFID-Transponder mit diversen Lagen kostenaufwendiger herstellbar und verhindert damit den Einsatz als Massenprodukt für die Identifikationssysteme bei Transportbehältern.

Es ist Aufgabe der Erfindung, ein in wenigen Produktionsschritten sicher und kostengünstig herstellbares Transportbehältnis mit RFID-Transponder und ein Verfahren zu dessen Herstellung zur Verfügung zu stellen, das den hohen mechanischen Anforderungen bei der Produktion und dem Einsatz von Transportbehältnissen genügt. Es ist weiterhin Aufgabe der Erfindung, ein Etikett für den Einsatz mit Behältnissen der oben genannten Art, bzw. für den Einsatz mit Kunststoffformkörpern allgemein, bereitzustellen, welches einfach aufgebaut und kostengünstig herstellbar ist.

Die Aufgabe der Erfindung wird durch ein Verfahren zur Herstellung eines Behältnisses mit einem identifizierbaren, flexiblen Etikett und einem integrierten RFID-Transponder gelöst, bei dem ein Trägermaterial des flexiblen Etiketts (3) auf der Vorderseite (4) mit einer optisch lesbaren Kennzeichnung versehen wird und anschließend oder parallel dazu
die Rückseite (7) des Trägermaterials mit der Antennenstruktur aus elektrisch leitendem Material oder Polymer (6) versehen wird, wonach
ein Mikrochip (5) auf der Antennenstruktur (6) montiert wird und dass anschließend
das Etikett (3) mit dem integrierten RFID-Transponder (2) in einem IN-MOULD-Prozess mit dem Behältnis (1) verbunden wird, wobei
die Materialien von Behältnis (1) und Etikett (3) mit Transponder (2) im Wesentlichen das gleiche Schrumpfungs- und Ausdehnungsverhalten aufweisen und dass das flexible Etikett (3) einlagig ausgebildet wird.

Die Aufgabe der Erfindung wird weiterhin durch ein Behältnis zur Lagerung und zum Transport von Stück- und Schüttgütern mit einem identifizierbaren, flexiblen Etikett und einem darauf angeordneten RFID-Transponder gelöst, wobei das Behältnis und das flexible Etikett stoffschlüssig durch einen IN-MOULD-Prozess miteinander verbunden sind und dass der RFID-Transponder aus Mikrochip und Antennenstruktur auf der Rückseite des Etiketts, dem Behältnis zugewandt, angeordnet ist. Die Erfindung ist insbesondere dadurch gekennzeichnet, dass die Materialien von Behältnis und Etikett im Wesentlichen das gleiche Schrumpfungs- und Ausdehnungaverhalten aufweisen und dass das flexible Etikett einlagig ausgebildet ist, wobei der RFID-Transponder aus Mikrochip und Antennenstruktur direkt auf der Rückseite des Etiketts ohne eine zusätzliche Lage oder Schutzschicht angeordnet ist.

Die optisch lesbare Kennzeichnung und bzw. oder die Antennenstruktur werden dabei mittels additiver Verfahren auf das Trägermaterial des Etiketts aufgebracht. Besonders vorteilhaft ist das Bedrucken des Trägermaterials.

Der Vorteil der Erfindung besteht darin, dass zusätzliche Folienlagen oder Schichten auf dem Etikett nicht erforderlich sind und das Etikett somit konsequent einlagig ausgebildet werden kann.

Dies gestattet die Verwendung von Rolle-zu-Rolle-Druck- und Montageverfahren für das Bedrucken der Vorderseite des Etiketts mit einer optisch lesbaren Kennzeichnung und das Bedrucken der Rückseite des Etiketts mit der Antennenstruktur sowie die effiziente Montage der Mikrochips, der RFID-Transponder, auf der zugehörigen Antennenstruktur, ebenfalls im Rolle-zu-Rolle-Verfahren.

Die eingesetzten Werkstoffe und Werkstoffkombinationen sind abgestimmt einerseits auf die Herstellungsprozesse des einlagigen Etiketts mit Bedruckung von optisch detektierbaren Informationen auf der Vorderseite und der Bedruckung mit elektrisch leitenden Schichten auf der Rückseite sowie der Chipkontaktierung des RFID Chips auf die Antennenstruktur. Andererseits sind alle eingesetzten Werkstoffe und Materialien abgestimmt auf den IN-MOULD-Prozess der ohne Prozessänderungen erfolgen kann und die komplette elektrische Funktionalität des elektronischen Etiketts gewährleistet.

Insbesondere die Härtetemperatur der polymeren Pasten, welche die Antennenstruktur bilden, wird kleiner als 150°C gewählt.

Das Etikett und das Behältnis werden bevorzugt aus einem thermoplastischen Kunststoff ausgebildet, der hervorragend für das IN-MOULD-Verfahren geeignet ist. Ein positiver Effekt bei dieser Ausgestaltung besteht dabei darin, dass das Behältnis mitsamt dem Etikett optimal recyclebar ist. Besonders bevorzugt bestehen Etikett und Behältnis aus Polyethylen. Die Verwendung des Materials Polyethylen mit hoher Dichte (PE-HD) führt zu besonders beanspruchbaren Behältnissen mit ebenso beanspruchbaren RFID-Transponderetiketten. Es ist nicht zwangsläufig erforderlich, immer das gleiche Kunststoffmaterial für Behältnis und Etikett bzw, Trägersubstrat einzusetzen. Der Konzeption der Erfindung entspricht es auch, wenn die Materialien miteinander IN-MOULD-fähig sind und ähnliche Schrumpf- und Ausdehnungskoeffizienten aufweisen.

Überraschenderweise wurde gefunden, dass die Ursachen für Schäden an IN-MOULD-Transponderantennen in Kunststoffobjekten überwiegend auf die Herstellungsprozesse selbst zurückzuführen sind. Der Erfindung liegt nun die Konzeption zugrunde, die Beanspruchungen durch Spannungen zwischen Behältnis und Etikett zu verringern und eine Relativbewegung der Schichten zueinander zu vermeiden. Die Auswahl von Materialien mit im Wesentlichen übereinstimmendem Ausdehnungs- und Schrumpfungsverhalten verhindert erhebliche Verschiebungen der Schichten zueinander, Dadurch wird ermöglicht, dass die Antennenstrukturen, welche mechanisch besonders empfindlich sind, sich im gleichen Maße wie das Material des Behältnisses und dem Trägermaterial, dem Etikett, verändern und somit keine Schäden durch mechanische Verspannungen entstehen können. So kann auf alle zusätzlich auf das Etikett aufgebrachten Lagen und Schichten zum Schutz der Strukturen verzichtet werden, welche zwar die Probleme der Materialanpassung zum Kunststoffobjekt reduzieren sollen, aber den Verbund des Etiketts mit zusätzlichen mechanischen Spannungen durch die Schrumpfung belasten und somit zur Zerstörung des kontaktierten Chips und/oder der Leitbahnen führen.

Nach einer vorteilhaften Ausgestaltung der Erfindung ist die RFID-Antennenstruktur auf dem Etikett aus elektrisch leitenden Polymeren oder partikelgefüllten leitenden Pasten, beispielsweise Silberleitpaste, ausgebildet. Alternativ zur Verwendung einer Leitpaste können elektrisch leitende Farben, Klebstoffe und/oder leitende Partikel, insbesondere Nano-Partikel oder abgeschiedene metallische Schichten, für die Ausbildung der Antennenstruktur eingesetzt werden.

Nach einer vorteilhaften Ausgestaltung der Erfindung ist zusätzlich zum RFID-Transponder ein Strichcode auf der Vorderseite des Etiketts angebracht, wodurch eine doppelte Identifizierung des Behältnisses durch den Strichcode und die RFID-Transpondertechnologie ermöglicht wird. Die damit erreichbare Redundanz genügt hohen Anforderungen an Identifizierungssysteme.

In einer weiteren vorteilhaften Ausgestaltung der Erfindung wird die Information des Barcodes bzw. Strichcodes während des Herstellungsprozesses des Etiketts an sich auch in den RFID Chip geschrieben und somit eine identische Kennzeichnung, bzw. ein in bestimmten Teilen übereinstimmender Informationsgehalt von Barcode und RFID Chip erreicht. Dies ist insbesondere vorteilhaft, wenn auf Grund der Eigenschaften der Informationen eine Redundanz gewünscht oder erforderlich ist.

Besonders hervorzuheben ist der Vorteil, dass die eingesetzten Rolle-zu-Rolle-Verfahren besonders kostengünstig einsetzbar sind und somit die Kosten der Behältnisse durch den Einsatz dieser Technologie niedriger sind als nach dem Stand der Technik bekannte Behältnisse.

Nach einer vorteilhaften Ausgestaltung der Erfindung wird das Behältnis als stapelbares oder zusammenlegbares Behältnis ausgebildet.

Vorteilhaft kann vorgesehen sein, dass das Behältnis als Einkaufswagen ausgeführt ist und dass das Etikett mit dem RFID-Transponder in die Seitenwand, das Griffelement oder die Rollen integriert ist.

Für die effiziente Herstellung der Transponder ist es vorteilhaft, dass die Verbindung zwischen dem Mikrochip und der Antennenstruktur des RFID-Transponders mittels Kontakthügeln, gedruckten Kontakten oder mittels additiver Verfahren hergestellter Kontakte erfolgt.

Die Verbindung zwischen dem Mikrochip und der Antennenstruktur des RFID-Transponders wird vorteilhaft mittels Kontakthügeln und unter Nutzung von isotrop leitenden, anisotrop leitenden oder nicht-leitenden Klebstoffen ausgebildet.

Weiterhin kann die Verbindung zwischen Mikrochip und der Antennenstruktur des RFID-Transponders mittels Kontakthügeln und unter Nutzung metallischer Verbindungstechniken wie Löten oder Schweißen hergestellt werden.

Alternativ dazu wird die Verbindung zwischen Mikrochip und der Antennenstruktur des RFID-Transponders ohne Kontakthügel und unter Nutzung von gedruckten oder galvanischen, chemischen sowie vakuumtechnischen Abscheideverfahren hergestellt.

Der Erfindungsgedanke ganz allgemein ist anwendbar auf jedwede Art von Kunststoffformteilen, die im IN-MOULD-Verfahren hergestellt und dabei mit Flächenelementen, wie beispielsweise Etiketten, versehen werden. Vom Erfindungsgedanken umfasst sind insbesondere Kunststoffformteile zur Kennzeichnung von Gegenständen, die selbst aus anderen, nicht IN-MOULD-fähigen Materialien bestehen, wie beispielsweise Metall, Glas oder Holz. Die erfindungsgemäßen Kunststoffformteile mit den IN-MOULD-Etiketten mit integriertem RFZD-Tranaponder werden mit Gegenständen, wie Gasflaschen fälschungs- und manipulationssicher beispielsweise durch Formschluss verbunden,

Eine vorteilhafte Ausgestaltung der Erfindung besteht darin, dass das Material des Etiketts Zuschlagstoffe zur Angleichung des Schrumpfungs- und Ausdehnungsverhaltens an das Material des Kunststofformteils enthält, wodurch auch ansonsten unterschiedliche Materialien für einen gemeinsamen Einsatz in IN-MOULD-Verfahren modifiziert werden können.

Derartige Zuschlagstoffe sind beispielsweise Partikel anorganischer Materialien wie Tone, Sande oder Zeolithe.

In besonderer Art und Weise wird es dadurch möglich, die Form ändernden Eigenschaften der Materialien für das Etikett mit dem zusätzlichen Effekt einer Veränderung der Oberfläche des Etiketts und damit verbundener Eigenschaftsänderungen für eine verbesserte Beschreibbarkeit oder Ähnliches zu erreichen.

Weitere Einzelheiten, Merkmale und Vorteile der Erfindung ergeben sich aus der nachfolgenden Beschreibung von Ausführungsbeispielen mit Bezugnahme auf die zugehörigen Zeichnungen. Es zeigen:
Fig. 1: Ausschnitt Behältnis mit flexiblem Etikett und RFID-Transponder;
Fig. 2: Einkaufswagen mit integriertem flexiblem Etikett und RFID-Transponder und
Fig. 3: Gasflasche mit aufgesetztem Kunststoffformteil mit integriertem flexiblem Etikett und RFID-Transponder.

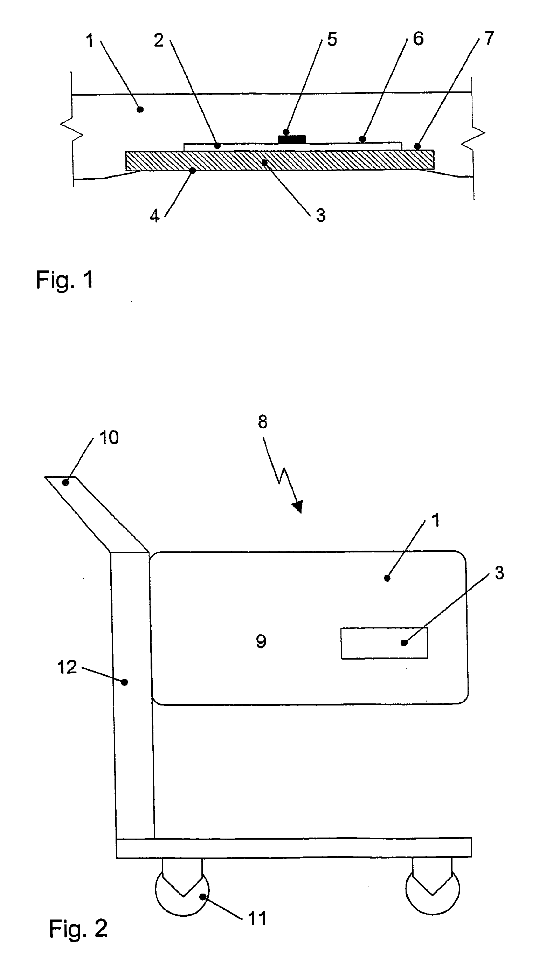

In Figur 1 ist ein Ausschnitt aus einer Behälterwand eines Transportbehälters 1 dargestellt, welcher einen RFID-Transponder 2 in IN-MOULD-Technologie enthält. Der Transportbehälter 1 wird in Spritzgusstechnik aus Polyethylen hergestellt.

Das Etikett 3 ist das Trägermaterial für den RFID-Transponder 2, auf welchem die Transponderantenne 6 und der Mikrochip 5 angeordnet sind, und ist gleichfalls aus Polyethylen ausgebildet.

Um mechanisch den größten Schutz vor einer Zerstörung derrelativ empfindlichen Antennenstruktur 6 zu gewährleisten, ist der Transponder 2 mit der Antennenstruktur 6 und dem Mikrochip 5 auf der Rückseite 7 des Etiketts 3 angeordnet.

Eine stoffschlüssige und somit schwer bzw, untrennbar ausgebildete Verbindung zwischen Behältnis 1 und Etikett 3 wird durch das IN-MOULD-Verfahren erzeugt. Dabei wird das Etikett 3 während des Herstellungsprozesses des Transportbehälters 1 direkt mit in die Form eingebracht und eingespritzt. Es entsteht eine Verbindung zwischen den Materialien des Behältnisses 1 und des Etiketts 3, die äußerst widerstandsfähig ist und letztlich durch die Materialeigenschaften der auf diese Weise verbundenen Materialien selbst bestimmt wird. Die nach dem Herstellungsprozess heißen Behältnisse 1 kühlen ab und schrumpfen definiert auf die Endmasse der Produkte. Die Verbindung von Behältnis 1 und Etikett 3 bleibt konzeptionsgemäß relativ zueinander stabil erhalten, da die beiden Schichten im Wesentlichen das gleiche Schrumpfungsverhalten aufweisen. Somit entstehen keine Spannungen zwischen den Schichten, die zu einer Zerstörung des Transponders 2 und insbesondere der Antennenstruktur 6 führen können.

Das Etikett 3 ist auf seiner Vorderseite 4 - und damit optisch von außen erfassbar - zusätzlich mit einem Strichcode versehen. Dadurch können Informationen über das Behältnis parallel oder zusätzlich mit einem alternativen Erfassungssystem ausgelesen werden. Weiterhin gestattet das von außen sichtbare Etikett 3 die Platzierung von grafischen Elementen zu Werbe- oder Kennzeichnungszwecken auf der Vorderseite 4 des Etiketts 3.

Der besonders Vorteil der vorgeschlagenen Lösung liegt in der Reduzierung der Kosten für die Herstellung und die Materialien des identifizierbaren Behältnisses. Durch den einlagigen Aufbau und damit die konsequente Anpassung der Werkstoffe des Etiketts an das IN-MOULD-Material sind keinerlei Änderungen durch die zusätzliche RFID-Funktionalität im Etikett am herkömmlichen IN-MOULD-Prozess notwendig. Weiterhin steigt die Zuverlässigkeit bei der Herstellung durch angepasstes Material von Etikett und Behältnis bzw. Kunststoffformteil.

Besonders effizient ist das Verfahren zur Herstellung des Etiketts ausgebildet, wenn die Herstellung des einlagigen Etiketts komplett in kontinuierlichen Rolle-zu-Rolle-Fertigungsverfahren erfolgt.

So werden in einem ersten Druckschritt die Oberseiten des Etiketts mit optisch detektierbaren Informationen, Barcode und/oder Schriftzeichen und/oder Bildern bedruckt und getrocknet. Parallel hierzu oder anschließend werden die Unterseiten des Etiketts, ebenfalls im Rolle zu Rolle Verfahren, mit elektrisch leitenden Materialien zur Ausbildung der RFID-Antennen bedruckt. Die Härtung der Leitpasten erfolgt in einem Temperaturbereich kleiner 150°C, um die Eigenschaften des Etikettenmaterials nicht irreversibel zu verändern. Die Positionierung der Antennenstruktur auf der Rückseite des Etiketts zu den optisch detektierbaren Information auf der Vorderseite des Etiketts erfolgt unter Nutzung von Positioniermarken,

In einem sich daran anschließenden Montageprozess wird der RFID-Chip mit der Antenne in Flip Chip Technologie und unter Nutzung von Klebstoffen verbunden. Die Klebstoffe selbst sind dem Trägermaterial angepasst und die Härtung der Klebstoffe erfolgt durch partielle Wärmezufuhr für eine Zeitdauer von kleiner als 9 sec. Die RFID-Etiketten werden anschließend elektrisch getestet und nachfolgend wird die Information des Barcodes gelesen und in den zugehörigen RFID-Chip geschrieben.

Die so hergestellten Etiketten werden in dem an sich bekannten IN-MOULD-Prozess ohne notwendige technologische Änderungen, mit dem Behältnis oder dem Kunststoffformteil stoffschlüssig verbunden.

In Fig. 2 ist eine Anwendung der Erfindung in der Ausgestaltung als Einkaufswagen 8 dargestellt.

Derartige wiederverwendbare Transportbehältnisse 1 im Sinne der Erfindung bestehen bekanntlich aus diversen Komponenten unterschiedlichster Materialien. An einem Rahmen 12 aus Metall sind das eigentliche Behältnis 1 zur Aufnahme der Produkte, die Rollen 11 und ein Griffelement 10, einem Kunststoffformteil, angeordnet. Der RFID-Transponder 2 wird nun in den Komponenten des Einkaufswagens 8 integriert, die aus Kunststoffen im Spritzgießverfahren herstellbar sind, wobei das Etikett 3 mit dem Transponder 2 in einem IN-MOULD-Prozess in diese Komponenten integrierbar ist. Von besonderem Vorteil ist dabei, dass das Etikett 3 flexibel ist und sich der Form des Spritzgussteiles beim IN-MOULD-Prozess anpasst. Auf diese Weise kann der Transponder mit dem Etikett in das Griffelement 10, die Rollen 11 und/oder die Seitenwände 9 bzw. Abdeckungen oder Ähnlichem eingebracht werden. Der zusätzliche Vorteil der Anordnung von grafischen Elementen als Werbung auf dem Etikett 3 kommt besonders dann zur Geltung, wenn - wie dargestellt - das Etikett 3 gut sichtbar in die Seitenwände 9 des Behältnisses 1 des Einkaufswagens 8 integriert ist.

Alternativ kann der Transponder auch in die Rollen 11 des Einkaufswagens 8 integriert werden. Von Vorteil bei dieser Ausgestaltung ist, dass die Auslesbarkeit des Transponders durch den sicher definierten Abstand zur Sende- und Empfangseinheit des RFID-Systems, im Fußboden beispielsweise, mit höchster Sicherheit gewährleistet werden kann.

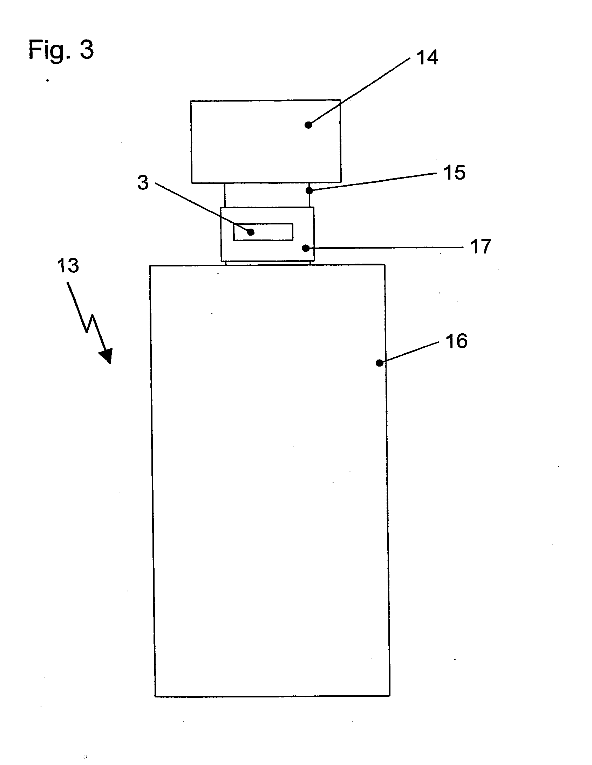

In Fig. 3 ist eine Ausgestaltung der Erfindung gezeigt, welche die Kennzeichnung von Gegenständen aus nicht IN-MOULD-fähigen Materialien mittels Kunststoffformteilen ermöglicht, welche mit flexiblen Etiketten mit RFID-Transpondern versehen und mit den entsprechenden Gegenständen verbunden sind.

Über die beliebig an die jeweiligen Gegenstände anpassbaren Kunststoffformteile ist das Prinzip der Kennzeichnung von Behältnissen oder Gegenständen mit manipulationssicheren Etiketten auf dieselben möglich, auch wenn die Behältnisse oder Gegenstände selbst nicht aus einem IN-MOULD-fähigen Material ausgebildet sind.

Dieser Erfindungsgedanke ist anschaulich verwirklicht am Ausführungsbeispiel einer Gasflasche 13, welche aus einem Flaschenkopf 14, einem Flaschenkörper 16 und einem dazwischen liegenden Flaschenhals 15 besteht. Der Flaschenhals 15 zwischen Flaschenkopf 14 und Flaschenkörper 16 ist verjüngt und mit einem Flaschenkragen 17 ummantelt, wobei Vorkehrungen getroffen sind, den Flaschenkragen 17 manipulations- und fälschungssicher, beispielsweise formschlüssig, mit dem Flaschenhals 15 zu verbinden.

Der Flaschenkragen 17 ist als Kunststoffformteil ausgebildet, in welchen das Etikett 3 stoff- und formschlüssig integriert ist. In die Rückseite 7 des Etiketts 3 wiederum ist der RFID-Transponder 2 mit der Antennenstruktur 6 und dem Mikrochip 5 integriert.

Sicherheitstechnisch hochrelevante Daten, wie Gefahrenklasse und chemische Zusammensetzung des Inhalts der Flasche sind bevorzugt redundant auf dem Barcode, dem Aufdruck des Etiketts und auf dem Transponder gespeichert. Somit sind die Erkennbarkeit des Inhalts und damit zusammenhängende Behandlungsvorschriften sofort für einen Betrachter optish erkennbar und gleichzeitig für transpondergestützte Informationssysteme elektronish erfassbar. Dies erhöht nachhaltig die Sicherheit und verhindert weitgehend Manipulationen.

### Bezugszeichenliste

- 1: Behältnis/Transportbehälter/Transportbehältnis
- 2: RFID-Transponder
- 3: Etikett, Trägermaterial
- 4: Vorderseite des Etiketts 3
- 5: Mikrochip
- 6: Transponderantenne, Antennenstruktur
- 7: Rückseite des Etiketts 3
- 8: Einkaufswagen
- 9: Seitenwände
- 10: Griffelement
- 11: Rollen
- 12: Rahmen
- 13: Gasflasche
- 14: Flaschenkopf
- 15: Flaschenhals
- 16: Flaschenkörper
- 17: Flaschenkragen

## Patentansprüche

1. Verfahren zur Herstellung eines Behältnisses (1) mit einem identifizierbaren, flexiblen Etikett (3) und einem integrierten RFID-Transponder (2), bei dem
• ein Trägermaterial des flexiblen Etiketts (3) auf der Vorderseite (4) mit einer optisch lesbaren Kennzeichnung versehen wird und anschließend oder parallel dazu
• auf der Rückseite (7) des Trägermaterials des flexiblen Etiketts (3) ein RFID-Transponder (2) mit einem Mikrochip (5) und einer Antennenstruktur (6) angebracht wird, wonach
• das Etikett (3) mit dem RFID-Transponder (2) in einem IN-MOULD-Prozess mit dem Behältnis (1) verbunden wird, wobei
• die Materialien von Behältnis (1) und Etikett (3) mit RFID-Transponder (2) im Wesentlichen das gleiche Schrumpfungs- und Ausdehnungsverhalten aufweisen, **dadurch gekennzeichnet, dass**
• das Trägermaterial des flexiblen Etiketts (3) einlagig ausgebildet wird,
• die Antennenstruktur (6) des RFID-Transponders (2) direkt auf die Rückseite (7) des einlagigen Trägermaterials angebracht wird, und
• ein Mikrochip (5) des RFID-Transponders (2) direkt auf der Antennenstruktur (6) montiert wird.

2. Verfahren nach Anspruch 1, **dadurch gekennzeichnet, dass** die optisch lesbare Kennzeichnung und/oder die Antennenstruktur (6) mittels additiver Verfahren auf das Trägermaterial aufgebracht wird.

3. Verfahren nach Anspruch 2, **dadurch gekennzeichnet, dass** die optisch lesbare Kennzeichnung und/oder die Antennenstruktur (6) auf das Trägermaterial gedruckt werden.

4. Verfahren nach Anspruch 3, **dadurch gekennzeichnet, dass** das Bedrucken des Trägermaterials des flexiblen Etiketts (3) in einem Rolle-zu-Rolle-Druckverfahren durchgeführt wird.

5. Verfahren nach einem der Ansprüche 1 bis 4, **dadurch gekennzeichnet, dass** der Mikrochip (5) auf der Antennenstruktur (6) mittels eines Rolle-zu-Rolle-Montageverfahrens montiert wird.

6. Behältnis (1) zur Lagerung und zum Transport von Stück- und Schüttgütern mit einem identifizierbaren, flexiblen Etikett (3) und einem darauf angeordneten RFID-Transponder (2), wobei das Behältnis (1) und das flexible Etikett (3) stoffschlüssig durch einen IN-MOULD-Prozess miteinander verbunden sind und der RFID-Transponder (2) aus Mikrochip (5) und Antennenstruktur (6) auf der Rückseite (7) des Etiketts (3), dem Behältnis (1) zugewandt, angeordnet ist, wobei die Materialien von Behältnis (1) und Etikett (3) im Wesentlichen das gleiche Schrumpfungs- und Ausdehnungsverhalten aufweisen, **dadurch gekennzeichnet, dass** das flexible Etikett (3) einlagig ausgebildet ist, wobei der RFID-Transponder (2) aus Mikrochip (5) und Antennenstruktur (6) direkt auf der Rückseite (7) des Etiketts (3) ohne eine zusätzliche Lage oder Schutzschicht angeordnet ist und dass eine optisch lesbare Kennzeichnung sowie die Antennenstruktur (6) mittels additiver Verfahren auf dem Etikett ausgebildet sind.

7. Behältnis nach Anspruch 6, **dadurch gekennzeichnet, dass** das Etikett (3) und das Behältnis (1) aus thermoplastischen Kunststoffen und deren Derivaten ausgebildet sind.

8. Behältnis nach Anspruch 6 oder 7, **dadurch gekennzeichnet, dass** das Etikett (3) und das Behältnis (1) aus Polyethylen (PE) ausgebildet sind.

9. Behältnis nach einem der Ansprüche 6 bis 8, **dadurch gekennzeichnet, dass** die Antennenstruktur (6) auf dem Etikett (3) aus elektrisch leitendem Polymer oder Klebstoff, Farben und/oder leitenden Partikeln ausgebildet ist.

10. Behältnis nach einem der Ansprüche 6 bis 9, **dadurch gekennzeichnet, dass** die Antennenstruktur (6) auf dem Etikett (3) aus einer Antennenstruktur und einem mit der Antennenstruktur elektrisch verbundenen weiteren Trägerelement besteht, auf dem der Mikrochip (5) montiert ist.

11. Behältnis nach einem der Ansprüche 6 bis 10, **dadurch gekennzeichnet, dass** zusätzlich zum RFID-Transponder (2) ein Strichcode und/oder alphanumerische Zeichen auf der Vorderseite (4) des Etiketts (3) angeordnet ist/sind.

12. Behältnis nach Anspruch 11, **dadurch gekennzeichnet, dass** die Informationen des Strichcodes und/oder der alphanumerischen Zeichen auf der Vorderseite (4) des Etiketts (3) im Mikrochip (5) gespeichert sind.

13. Behältnis nach einem der Ansprüche 6 bis 12, **dadurch gekennzeichnet, dass** die Verbindung zwischen Mikrochip (5) und der Antennenstruktur (6) des RFID-Transponders (2) mittels Kontakthügeln, gedruckten Kontakten oder mittels additiver Verfahren hergestellter Kontakte ausgebildet ist,

14. Behältnis nach einem der Ansprüche 6 bis 13, **dadurch gekennzeichnet, dass** die Verbindung zwischen Mikrochip (5) und der Antennenstruktur (6) des RFID-Transponders (2) mittels Kontakthügeln und unter Nutzung von isotrop leitenden, anisotrop leitenden oder nicht leitenden Klebstoffen ausgebildet ist.

15. Behältnis nach einem der Ansprüche 6 bis 14, **dadurch gekennzeichnet, dass** die Verbindung zwischen Mikrochip (5) und der Antennenstruktur (6) des RFID-Transponders (2) ohne Kontakthügel und unter Nutzung von gedruckten oder galvanischen, chemischen sowie vakuumtechnischen Abscheideverfahren hergestellt ist.

## Claims

1. Method for the production of a container (1) having an identifiable flexible label (3) and an integrated RFID transponder (2), in which
• a carrier material of the flexible label (3) is provided on the front side (4) with an optically readable identifier and subsequently or in parallel therewith
• an RFID transponder (2) having a microchip (5) and an antenna structure (6) is applied to the rear side (7) of the carrier material of the flexible label (3), after which
• the label (3) having the RFID transponder (2) is connected to the container (1) in an in-mould process,
• the materials of container (1) and label (3) with RFID transponder (2) having substantially the same shrinkage and expansion behaviour, **characterized in that**
• the carrier material of the flexible label (3) is formed in one layer,
• the antenna structure (6) of the RFID transponder (2) is applied directly to the rear side (7) of the one-layer carrier material, and
• a microchip (5) of the RFID transponder (2) is mounted directly on the antenna structure (6).

2. Method according to Claim 1, **characterized in that** the optically readable identifier and/or the antenna structure (6) are applied to the carrier material by means of additive methods.

3. Method according to Claim 2, **characterized in that** the optically readable identifier and/or the antenna structure (6) are printed onto the carrier material.

4. Method according to Claim 3, **characterized in that** the printing of the carrier material of the flexible label (3) is carried out in a roll-to-roll printing process.

5. Method according to one of Claims 1 to 4, **characterized in that** the microchip (5) is mounted on the antenna structure (6) by means of a roll-to-roll mounting process.

6. Container (1) for storing and transporting piece goods and bulk material, having an identifiable flexible label (3) and an RFID transponder (2) arranged thereon, the container (1) and the flexible label (3) being connected integrally to each other by an in-mould process, and the RFID transponder (2) comprising microchip (5) and antenna structure (6) being arranged on the rear side (7) of the label (3), facing the container (1), the materials of container (1) and label (3) having substantially the same shrinkage and expansion behaviour, **characterized in that** the flexible label (3) is formed in one layer, the RFID transponder (2) comprising microchip (5) and antenna structure (6) being arranged directly on the rear side (7) of the label (3) without an additional layer or protective layer, and **in that** an optically readable identifier and the antenna structure (6) are formed on the label by means of additive methods.

7. Container according to Claim 6, **characterized in that** the label (3) and the container (1) are formed from thermoplastics and derivatives thereof.

8. Container according to Claim 6 or 7, **characterized in that** the label (3) and the container (1) are formed from polyethylene (PE).

9. Container according to one of Claims 6 to 8, **characterized in that** the antenna structure (6) on the label (3) is formed from electrically conductive polymer or adhesive, coatings and/or conductive particles.

10. Container according to one of Claims 6 to 9, **characterized in that** the antenna structure (6) on the label (3) comprises an antenna structure and a further carrier element which is connected electrically to the antenna structure and on which the microchip (5) is mounted.

11. Container according to one of Claims 6 to 10, **characterized in that**, in addition to the RFID transponder (2), a bar code and/or alphanumeric symbol is/are arranged on the front side (4) of the label (3).

12. Container according to Claim 11, **characterized in that** the information from the bar code and/or the alphanumeric symbol on the front side (4) of the label (3) is stored in the microchip (5).

13. Container according to one of Claims 6 to 12, **characterized in that** the connection between microchip (5) and the antenna structure (6) of the RFID transponder (2) is formed by means of contact studs, printed contacts or contacts produced by means of additive methods.

14. Container according to one of Claims 6 to 13, **characterized in that** the connection between microchip (5) and the antenna structure (6) of the RFID transponder (2) is formed by means of contact studs and by using isotropically conductive, anisotropically conductive or non-conductive adhesives.

15. Container according to one of Claims 6 to 14, **characterized in that** the connection between microchip (5) and the antenna structure (6) of the RFID transponder (2) is produced without contact studs and by using printed or electroplating, chemical and vacuum deposition methods.

## Revendications

1. Procédé de fabrication d'un récipient (1) muni d'une étiquette souple (3) identifiable et d'un transpondeur RFID (2) intégré, selon lequel
* un matériau porteur de l'étiquette souple (3) est muni sur le côté avant (4) d'un identifiant à lecture optique et ensuite ou parallèlement à cela
* un transpondeur RFID (2) comprenant une puce miniature (5) et une structure d'antenne (6) est monté sur le côté arrière (7) du matériau porteur de l'étiquette souple (3), après quoi
* l'étiquette (3) munie du transpondeur RFID (2) est liée avec le récipient (1) au cours d'un processus IN-MOULD,
* les matériaux du récipient (1) et de l'étiquette (3) munie du transpondeur RFID (2) présentant pour l'essentiel le même comportement de rétraction et d'expansion, **caractérisé en ce que**
* le matériau porteur de l'étiquette souple (3) est réalisé en une seule couche,
* la structure d'antenne (6) du transpondeur RFID (2) est appliquée directement sur le côté arrière (7) du matériau porteur monocouche et
* une puce miniature (5) du transpondeur RFID (2) est montée directement sur la structure d'antenne (6).

2. Procédé selon la revendication 1, **caractérisé en ce que** l'identifiant à lecture optique et/ou la structure d'antenne (6) sont appliqués sur le matériau porteur au moyen d'un procédé additif.

3. Procédé selon la revendication 2, **caractérisé en ce que** l'identifiant à lecture optique et/ou la structure d'antenne (6) sont imprimés sur le matériau porteur.

4. Procédé selon la revendication 3, **caractérisé en ce que** l'impression du matériau porteur de l'étiquette souple (3) est réalisée dans un procédé d'impression à rouleau contre rouleau.

5. Procédé selon l'une des revendications 1 à 4, **caractérisé en ce que** la puce miniature (5) est montée sur la structure d'antenne (6) au moyen d'un procédé de montage à rouleau contre rouleau.

6. Récipient (1) pour le stockage et le transport de marchandises au détail et en vrac, muni d'une étiquette souple (3) identifiable et d'un transpondeur RFID (2) disposé sur celle-ci, le récipient (1) et l'étiquette souple (3) étant liés l'un à l'autre pas fusion de matière par un processus IN-MOULD et le transpondeur RFID (2), constitué d'une puce miniature (5) et d'une structure d'antenne (6), étant disposé sur le côté arrière (7) de l'étiquette (3), faisant face au récipient (1), les matériaux du récipient (1) et de l'étiquette (3) présentant pour l'essentiel le même comportement de rétraction et d'expansion, **caractérisé en ce que** l'étiquette souple (3) est réalisée en une seule couche, le transpondeur RFID (2) constitué de la puce miniature (5) et de la structure d'antenne (6) étant disposé directement sur le côté arrière (7) de l'étiquette (3), sans couche supplémentaire ni couche de protection, et **en ce qu'**un identifiant à lecture optique ainsi que la structure d'antenne (6) sont formés sur l'étiquette au moyen d'un procédé additif.

7. Récipient selon la revendication 6, **caractérisé en ce que** l'étiquette (3) et le récipient (1) sont réalisés en matières thermoplastiques et leurs dérivées.

8. Récipient selon la revendication 6 ou 7, **caractérisé en ce que** l'étiquette (3) et le récipient (1) sont réalisés en polyéthylène (PE).

9. Récipient selon l'une des revendications 6 à 8, **caractérisé en ce que** la structure d'antenne (6) sur l'étiquette (3) est réalisée à partir d'un polymère ou d'un adhésif électriquement conducteur, de peintures et/ou de particules conductrices.

10. Récipient selon l'une des revendications 6 à 9, **caractérisé en ce que** la structure d'antenne (6) sur l'étiquette (3) se compose d'une structure d'antenne et d'un autre élément porteur relié électriquement avec la structure d'antenne et sur lequel est montée la puce miniature (5).

11. Récipient selon l'une des revendications 6 à 10, **caractérisé en ce qu'**en plus du transpondeur RFID (2), un code à barres et/ou des caractères alphanumériques est/sont disposé(s) sur le côté avant (4) de l'étiquette (3).

12. Récipient selon la revendication 11, **caractérisé en ce que** les informations du code à barres et/ou des caractères alphanumériques sur le côté avant (4) de l'étiquette (3) sont enregistrées dans la puce miniature (5).

13. Récipient selon l'une des revendications 6 à 12, **caractérisé en ce que** la liaison entre la puce miniature (5) et la structure d'antenne (6) du transpondeur RFID (2) est réalisée au moyen de contacts en relief, de contacts imprimés ou de contact réalisés par procédé additif.

14. Récipient selon l'une des revendications 6 à 13, **caractérisé en ce que** la liaison entre la puce miniature (5) et la structure d'antenne (6) du transpondeur RFID (2) est formée au moyen de contacts en relief et en utilisant des adhésifs conducteurs isotropes, conducteurs anisotropes ou non conducteurs.

15. Récipient selon l'une des revendications 6 à 14, **caractérisé en ce que** la liaison entre la puce miniature (5) et la structure d'antenne (6) du transpondeur RFID (2) est réalisée sans contacts en relief et en utilisant un procédé de précipitation par impression ou encore galvanique, chimique et à technique de vide.
